# EUROPEAN PATENT APPLICATION

(11) **EP 2 543 246 A1**
(43) Date of publication of application: **09.01.2013**
(21) Application number: 12174969.1
(22) Date of filing: 04.07.2012
(51) Int. Cl.: A01J 27/02, A23C 19/16, A23L 1/00, A23L 1/03, A23P 1/08

(54) **Cheese coating compositions having biopreservative properties**

(30) Priority: 04.07.2011 NL 2007037
(71) Applicant: CSK Food Enrichment B.V., 8938 AS Leeuwarden (NL)
(72) Inventor: Griffin, Carmel, Bandon, County Cork (IE); Mills, Susan, Tralee, County Kerry (IE); Ross, Paul, Kilworth, County Cork (IE); Koopmans, Wieger Jan, 8911 ET Leeuwarden (NL); Kevelam, Jan, 6718 HR Ede (NL); Serrano Davalos, Lourdes Mariela, 6828 JC Arnhem (NL); Meijer, Willem Cornelis, 6712 HA Ede (NL)
(74) Representative: Bot, David Simon Maria

(57) **Abstract**

The present invention relates to a water-borne cheese coating composition comprising one or more film forming agents selected from the group consisting of an emulsion polymer and a biopolymer dispersion and that further comprises viable lactic acid bacteria. The lactic acid bacteria provide a biopreservative effect against unwanted microorganisms in the coating composition and/or on the surface of a cheese treated therewith.

## Description

### Field of the invention

The present invention is in the field of cheese coatings. A cheese coating is provided which has enhanced stability against microbial spoilage. It has biopreservative properties due to the presence of certain bacteria. Also the invention concerns preferred bacterial species and cultures.

### Background of the invention

The use of water-borne compositions comprising suitable polymers for coating cheese, in particular semi-hard and hard cheese, is known. Typically, cheese, in particular semi-hard and hard cheese, receives several treatments during ripening with a water-borne coating composition, usually with intermittent drying, until the cheese has reached the desired degree of ripening.

Suitable known polymers for water-borne cheese coating compositions are selected from the group consisting of emulsion polymers and biopolymer dispersions.

Water-borne cheese coating compositions based on emulsion polymers commonly comprise plasticizer-free emulsions of poly(vinyl esters) or poly(meth)acrylates. Specifically, plasticizer-free emulsions of poly(vinyl acetate), particularly of poly(vinyl acetate-co-dibutyl maleate), are widely used for coating cheese. The Mowilith-Handbuch [Mowilith manual] from Hoechst AG (4th edition, 1969, chapter 6.8, pp. 201 ff.) discloses a plasticizer-free poly(vinyl acetate-co-dibutyl maleate) emulsion for use as a cheese coating, i.e. Mowilith® DM2 KL, having a solids content of approximately 45% (w/w). Herein, the "soft" monomer dibutyl maleate acts as an internal plasticizer for the "hard" monomer vinyl acetate. Suitable emulsion polymers based on vinyl esters, in particular vinyl acetate, and maleates, fumarates, acrylates or alpha-olefins, and their use for coating a cheese, are for example disclosed in EP 1458774, EP 1642929 and EP 1469017. Other suitable emulsion polymers are based on (meth)acrylic homo- and copolymers, see for example EP 1609367.

Known suitable biopolymer dispersions for water-borne cheese coating compositions include dispersions of poly(hydroxyalkanoate), such as those defined in EP 0766719. Other known suitable biopolymer dispersions for water-borne cheese coating compositions include aqueous compositions comprising at least partially denatured proteins, in particular globular proteins, such as those defined in WO 0180658.

The treatment of a cheese with water-borne coating compositions and subsequent drying thereof generates a protective film which counteracts excessively rapid drying of the cheese during ripening.

Another important function of water-borne cheese coating compositions is to contribute to, and maintain, a good hygienic condition of the cheese. Therefore, as a minimum requirement, the cheese coating composition itself should be free of spoilage microorganisms. This is not a trivial requirement since other than natamycin and a few organic acids and/or their salts, cheese coating compositions may generally not contain chemical preservatives such as (iso)thiazolinones and the like. Natamycin is a food-grade fungicide which allows effective protection of a cheese treated therewith against contamination with fungi and/or yeasts. A disadvantage of natamycin is that some fungi, especially *Penicillium echinulatum* var. *discolour,* have become tolerant or resistant against natamycin. Furthermore natamycin is not effective against bacteria.

### Summary of the invention

It is an objective of the present invention to provide a water-borne cheese coating composition which allows better control of unwanted microorganisms which may be present in said coating composition and/or on a cheese to be treated therewith, as compared with prior art cheese coating compositions.

It has been found that this objective can be met by providing a water-borne cheese coating composition comprising at least 20 wt.%, relative to the total weight of the composition, of one or more film forming agents selected from the group consisting of an emulsion polymer and a biopolymer dispersion, and wherein the cheese coating composition further comprises viable lactic acid bacteria, preferably at a colony forming unit density of at least 1.10⁶ cfu/g of the cheese coating composition.

Without being bound to theory it is believed that the presence of viable lactic acid bacteria, preferably at the indicated minimum colony forming unit density, contributes to preservation of said cheese coating composition against spoilage organisms, by a mechanism including competitive growth. This mechanism is believed to be effective to prevent outgrowth of unwanted fungi, yeasts and bacteria. Furthermore, during growth on available carbon sources, the lactic acid bacteria may produce metabolites such as lactic acid or even bacteriocins which act antagonistically against many unwanted bacteria.

The capability for lactic acid bacteria to survive in the water-borne cheese coating composition may exist even if no mono- or disaccharides are present in the cheese coating composition, or more generally if the total amount of mono- and disaccharides is 10000 ppm or less, preferably 5000 ppm or less or even 1000 ppm or less or 200 ppm or less. It is known that mono- and disaccharides constitute carbon sources which allow growth of bacteria, including spoilage bacteria.

The invention further provides a method for coating cheese comprising applying to the surface of the cheese the water-borne cheese coating composition according to the invention, and a coated cheese obtainable by said method. According to this aspect of the invention, the cheese surface itself may provide a growth medium for micro-organisms. In addition, the cheese surface is often contaminated with yeasts which may for example originate from the brine bath. This is especially the case when the cheese has been salted in brine. However yeasts or fungi may also contaminate the surface of the cheese via the atmosphere in a ripening room. Since *Lactobacilli* are well capable of growing on the surface of a cheese, presumably on account of their aerotolerance, the cheese coating composition preferably comprises *Lactobacilli* to outcompete said yeasts or fungi.

In the absence of a cheese, when kept or stored *per se,* the water-borne cheese coating composition preferably comprises at least 20 wt.%, relative to the total weight of the composition, of one or more film forming agents selected from the group consisting of an emulsion polymer and a biopolyester dispersion, wherein the cheese coating composition further comprises viable lactic acid bacteria at a total colony forming unit density of at least 1.10⁶ cfu/g of the water-borne cheese coating composition;
wherein the emulsion polymer comprises a polymer obtainable by emulsion polymerisation in the presence of a protective colloid; and
wherein the viable lactic acid bacteria comprise a bacterial species selected from the group consisting of *Lactobacillus.*

These preferred water-borne cheese coating compositions provide suitable carbon sources for micro-organisms *per se*; the biopolyesters will slowly degrade over time, providing monomers and/or oligomers which can be degraded by micro-organisms. The protective colloids may also be digested by micro-organisms. During growth on these carbon sources, the lactic acid bacteria (especially the *Lactobacilli*) are thought to produce metabolites such as lactic acid or even bacteriocins which act antagonistically against many unwanted bacteria, yeasts or fungi.

Incidentally, WO 2009/004409 discloses an aqueous composition comprising (parts by weight): 100 parts of live micro-organisms, 5.4-6.1 parts of organic material comprising selenium, 130-160 parts of natural or semisynthetic elastomeric membranes, and natural organic acids, said composition having a weight ratio between the water and the natural or semisynthetic membrane that ranges between 1.5:1 and 2.5:1, a pH that ranges between 4 and 6.5, and a viscosity equal to or less than 10,000 centipoise. However WO 2009/004409 deals with stable coatings only and is silent on a method for coating cheese. In a preferred example, the composition comprises shellac gum (see the example) which appears to be dissolved (see e.g. page 4, 2^{nd} paragraph and claim 6). In any case WO2009/004409 is silent on biopolyester *dispersions.*

The invention also provides an isolated strain of *Lactobacillus plantarum,* which has been given the accession number LMG P-26358, or a mutant thereof preferably having at least 95% 16S rRNA similarity, preferably identity, with said strain. The invention further provides a bacterial culture composition comprising viable bacteria of *Lactobacillus plantarum* LMG P-26358 or a mutant thereof preferably having at least 95%, more preferably at least 97%, more preferably about 100% 16S rRNA similarity, preferably identity, with said strain. The bacterial culture composition preferably comprises the viable bacteria of *Lactobacillus plantarum* LMG P-26358 or the mutant thereof at a viable count of 1.10⁸ cfu/ml, more preferably 1.10⁹ cfu/ml, most preferably of 1.10¹⁰ cfu/ml or higher. The viable count of the *Lactobacillus plantarum* LMG P-26358 or the mutant thereof will in practical conditions reside below 1.10¹² cfu/ml.

The strain of *Lactobacillus plantarum* LMG P-26358 has been deposited by the applicant under the Budapest Treaty on the International Recognition of the Deposit of Microorganisms for the Purposes of Patent Procedures at the BCCM in Gent, Belgium. Furthermore, LMG P-26358 is especially favourably used in the method and the water-borne cheese coating composition of the invention as it has not only antibacterial but also surprisingly showed fungicidal properties. Advantageously it was found that LMG P-26358 produces a Class IIA type bacteriocin. It is thus preferred that a mutant of LMG P-26358 as defined above has the capability to produce the same Class IIa type bacteriocin as LMG P-26358.

The water-borne cheese coating composition is conveniently prepared by a method comprising mixing an emulsion polymer and/or a biopolymer dispersion with a bacterial culture composition comprising viable lactic acid bacteria and optionally further additives for cheese coating compositions such as thickening agents, colourants, acids, bases, and/or fungicides.

Thus, the invention further provides a method for preparing a water-borne cheese coating composition, the method comprising
a. providing an emulsion polymer and/or a biopolymer dispersion;
b. providing a bacterial culture composition comprising viable lactic acid bacteria;
c. optionally, providing one or more further additives for cheese coating compositions such as thickening agents, colourants, acids, bases, and/or fungicides; and
d. mixing the ingredients provided in steps (a.) - (c.).

Throughout the present description and claims, the expression "one or more film forming agents selected from the group consisting of an emulsion polymer and a biopolymer dispersion" may be read as "an emulsion polymer". Emulsion polymers are commercially especially relevant as film forming agents in water-borne cheese coating compositions.

Thus, in an embodiment, the invention provides a water-borne cheese coating composition comprises at least 20 wt.%, relative to the total weight of the composition, of an emulsion polymer;
wherein the cheese coating composition further comprises viable lactic acid bacteria at a total colony forming unit density of at least 1.10⁶ cfu/g of the water-borne cheese coating composition;
wherein the emulsion polymer comprises a polymer obtainable by emulsion polymerisation in the presence of a protective colloid; and
wherein the viable lactic acid bacteria comprise a bacterial species selected from the group consisting of *Lactobacillus.*

### Detailed description of the invention

### Definitions

The term "lactic acid bacteria" is known to the person skilled in the art. In the context of this invention, the term "lactic acid bacteria" is preferably defined as Gram-positive, non-spore-forming, anaerobic or facultatively anaerobic, catalase negative cocci or rods capable of forming lactic acid as an end product of their carbohydrate metabolism. Well-known genera include *Bifidobacterium, Carnobacterium, Enterococcus, Lactobacillus, Lactococcus, Lactospaera, Leuconostoc, Oenococcus, Pediococcus, Streptococcus, Vagococcus* and *Weissella.* All lactic acid bacteria described herein are capable to ferment lactose, and thus to convert lactose into amongst others glucose as one of the first steps in their lactose metabolism.

The term "emulsion polymer" is known to the skilled person and preferably relates to a composition comprising an aqueous phase as a continuous phase and dispersed therein particles of a polymer; said composition is obtainable by emulsion polymerization of a monomer or monomer mixture. The emulsion polymer preferably comprises or even consists of a poly(vinyl ester) and/or a poly(meth)acrylate.

A poly(vinyl ester), or equivalently polyvinyl ester, is a polymer obtainable by polymerising a monomer or a monomer mixture comprising a vinyl ester monomer. The vinyl ester monomer is preferably a vinylic ester of an aliphatic saturated monocarboxylic acid having a chain length of C₁-C₁₈, which is most preferably vinyl acetate. A preferred polyvinyl ester is a polymer comprising vinyl acetate and dibutylmaleate, or a polymer comprising vinyl acetate and ethylene. A poly(meth)acrylate is a polymer obtainable by polymerising a monomer or a monomer mixture comprising a (meth)acrylate monomer. The (meth)acrylate monomer is preferably selected as a (meth)acrylic ester of an alkanol having a chain length of C₁-C₁₈.

The terms "poly(vinyl ester)" and "poly(meth)acrylate" are not mutually exclusive. For example, a copolymer of vinyl acetate and n-butylacrylate can be equally well defined as a poly(vinyl ester) or as a polyacrylate.

A poly(lactic acid) is a biopolyester obtainable by condensation polymerisation of lactic acid or a lactide and optionally further comonomers. Such further comonomers are preferably selected from the group consisisting of mono-alcohols, diols, mono-acids, diacids, polyols, polyacids, and hydroxyacids.

The expression "copolymer" relates to a polymer obtainable by polymerising two or more different monomers.

The chain length of a residue connected to a functional group, expressed as a number of carbon atoms, is specified with regard to the number of carbon atoms comprised by the residue, excluding the number of carbon atoms comprised by the functional group. Thus, for example, a C₁ monocarboxylic acid comprises two carbon atoms, of which one carbon atom is comprised by the carboxyl functional group and one carbon atom is comprised by the residue; in this example the C₁ monocarboxylic acid thus relates to acetic acid. In another example, a C₁ alkanol comprises one carbon atom, i.e. the carbon atom comprised by the C₁ residue which is connected to the hydroxyl functional group. The expression "a C₂ monoethylenically unsaturated dicarboxylic acid" may preferably represent fumaric acid or maleic acid (*i.e.* two carboxylic groups connected via a unsaturated C₂ (ethylenic) moiety).

The Tg (glass transition temperature, also Tg) of a polymer is preferably determined using differential scanning calorimetry. The method for determining the Tg of a polymer that is to be included in the water-borne cheese coating composition according to the invention is disclosed in DIN 53765, version March 1994, with the following modification: the heating and cooling rates are set at 10 K/min instead of at 20 K/min and wherein the sample size ranges between 5-10 mg. The film is dried at 100 °C for 1 hour immediately before measuring the Tg.

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

### The water-borne cheese coating composition.

The viable lactic acid bacteria are preferably present in an amount of at least 1.10⁶ cfu/g of the water-borne cheese coating composition, more preferably in an amount of at least 1.10⁷ cfu/g. The larger the viable cell count of the lactic acid bacteria, the better their biopreservative function. A practical upper limit of the total viable cell count of lactic acid bacteria is 1.10¹⁰ cfu/g. Herein, the expression "cfu/g" relates to viable cell count, expressed as colony forming units, per gram of the water-borne cheese coating composition. In this context, throughout this description, "viable cell count" is also referred to as "colony forming unit density".

In a preferred embodiment, the viable lactic acid bacteria comprise a bacterial species selected from the group consisting of *Lactobacillus.* Herein, preferably the total colony forming unit density of *Lactobacilli* is at least 1.10⁶ cfu/g, more preferably at least 1.10⁷ cfu/g, of the water-borne cheese coating composition. *Lactobacilli* are especially robust because of their aerotolerance.

In a further preferred embodiment, the viable lactic acid bacteria comprise a strain of *Lactobacillus plantarum.* Herein, preferably the total colony forming unit density of *Lactobacillus plantarum* is at least 1.10⁶ cfu/g, more preferably at least 1.10⁷ cfu/g, of the water-borne cheese coating composition.

Additionally or alternatively, the viable lactic acid bacteria comprise lactic acid bacteria which are capable of producing a bacteriocin. Herein, preferably the total colony forming unit density of lactic acid bacteria which are capable of producing a bacteriocin is at least 1.10⁶ cfu/g, more preferably at least 1.10⁷ cfu/g, of the water-borne cheese coating composition. Preferably the bacteriocin comprises a Class I or a Class II bacteriocin, or a mixture thereof. The Class I bacteriocin preferably comprises a nisin or a lacticin, or a mixture thereof. The Class IIa type bacteriocin preferably comprises a bacteriocin selected from the group consisting of a plantaricin, a pediocin, a sakacin, a mesentericin, a carnobacteriocin, a curvacin, a leucocin and an enterocin.

In a preferred embodiment, the viable lactic acid bacteria comprise a nisin-producing strain of *Lactococci,* such as a nisin-producing strain of *Lactococcus lactis* spp. *lactis* biovar. *diacetylactis* and/or a nisin-producing strain of *Lactococcus lactis* spp. *lactis.* Herein, preferably the total colony forming unit density of nisin-producing *Lactococci* is at least 1.10⁶ cfu/g, more preferably at least 1.10⁷ cfu/g, of the water-borne cheese coating composition. The capability to produce nisin is preferably encoded by genetic information that is present on, or derived from a transposon. The term "nisin-producing strain" or equivalently "strain capable of producing a nisin" preferably relates to a lactic acid bacterial strain which is capable, optionally in the presence of a yeast extract, to produce at least 10 IU, more preferably at least 100 IU, most preferably at least 300 IU of a nisin per ml of pasteurised milk during incubation of said milk for 24 hours at 30 °C, wherein the milk has been inoculated with the nisin-producing strain at about 10⁶ cfu/ml. Preferably within the context of this invention the term "nisin-producing strain" or equivalently "strain capable of producing a nisin" relates to a lactic acid bacterial strain which is capable, optionally in the presence of a yeast extract, to produce at least 100 IU, more preferably at least 300 IU of a nisin per ml of pasteurised milk during incubation of said milk for 8 hours at 30 °C, wherein the milk has been inoculated with the nisin-producing strain at about 10⁶ cfu/ml.

In a yet further preferred embodiment, the viable lactic acid bacteria comprise the strain *Lactobacillus plantarum* LMG P-26358. Herein, preferably the total colony forming unit density of *Lactobacillus plantarum* LMG P-26358 is at least 1.10⁶ cfu/g, more preferably at least 1.10⁷ cfu/g. of the water-borne cheese coating composition. It was found that the fungicidal effect of this *Lactobacilus* strain in the water-borne cheese coating compositions suddenly increases when the strain is present above the indicated threshold values of colony forming unit density The strain *Lactobacillus plantarum* LMG P-26358 is capable of producing a Class IIa bacteriocin, in casu a plantaricin, which is effective against certain *Enterococci* and *Listeria.* The amino acid sequence of the bacteriocin produced by the strain *Lactobacillus plantarum* LMG P-26358 has at least 99% similarity with the amino acid sequence of plantaricin 423 as described by Van Reenen et al. in Int. J. Food Microbiol. 2003, vol. 81, pp. 29-40.

Viable cell count for each bacterial species is conveniently determined by plating on a selective agar, optionally with further identification of the grown colonies preferably using genetic techniques, for example involving 16S rRNA sequencing.

The water-borne cheese coating composition preferably further comprises one or more further additives for cheese coating compositions. These additives are preferably one or more compounds selected from the group consisting of a thickening agent, a colourant, an acid, a base, a buffer salt, an anti-oxidant, a hydroxylic solvent and a fungicide.

The term "thickening agent" is known to the skilled person and, for example, is one or more compounds selected from the group consisting of a cellulose ether, a starch, a starch derivative, and a gum. The cellulose ether is preferably selected from hydroxyethylcellulose, methylcellulose, an alkali metal carboxymethylcellulose (preferably sodium carboxymethylcellulose), or a mixture thereof. The gum is preferably selected from xanthan gum, guar gum, locust bean gum, or a mixture thereof. The presence of the thickening agent may further enhance the survivability of the lactic acid bacteria in the cheese coating composition.

The fungicide is preferably one or more compounds selected from the group consisting of a polyene fungicide, formic acid, acetic acid and propionic acid. The polyene fungicide is preferably natamycin. The total concentration of formic acid, acetic acid and propionic acid in the water-borne cheese coating composition is preferably 2 wt.% or less, more preferably 1 wt.% or less, most preferably 0.5 wt.% or 0.1 wt.% or less with respect to the total weight of the water-borne cheese coating composition. High amounts of said acids are detrimental to the survivability of the lactic acid bacteria.

It is preferred that the water-borne cheese coating composition further comprises a polyene fungicide, especially natamycin. Especially in low concentrations, for example up to 1000 or even 500 ppm, natamycin does not negatively affect survivability of the lactic acid bacteria whilst enhancing the fungicidal properties of the water-borne cheese coating composition. The water-borne cheese coating composition preferably further comprises natamycin in an amount of 25-500 ppm relative to the weight of the water-borne cheese coating composition.

The pH of the water-borne cheese coating composition preferably resides between 3.5 and 7, more preferably between 4 and 6. Accordingly, good survivability of the lactic acid bacteria can be maintained, whilst sufficient chemical stability of a polyene fungicide, especially natamycin, can be maintained at the same time.

A preferred cheese coating composition comprises
(i) 30-50 wt.%, relative to the total weight of the composition, of the one or more film forming agents selected from the group consisting of an emulsion polymer and a biopolymer dispersion;
(ii) viable lactic acid bacteria at a colony forming unit density of at least 1.10⁶ cfu/g of the composition
(iii) 0-10 wt.%, more preferably 0.01 - 7 wt.% with respect to the total weight of the composition, of the one or more additives for cheese coating compositions; and
(iv) water.

In a preferred embodiment water is present to a total of 100 wt.% relative to the total weight of the composition. In a preferred embodiment, the cheese coating composition consists of the ingredeitns (i) - (iv).

Accordingly, when applied using conventional automatic coating devices for cheese, the coating composition allows for protection of the cheese with a sufficiently thick layer whilst the drying time of the coating layer on the cheese is still acceptable. Furthermore sufficient water (a water content of 40-70 wt.%) is available to allow survival and/or growth of the lactic acid bacteria.

In one embodiment the cheese coating composition according to the invention comprises one or more film forming agents selected from one or more emulsion polymers. In this embodiment the weight ratio *bp* / *(ep* + *bp*), wherein *bp* = the total weight of the biopolymer, calculated on dry matter, comprised by the cheese coating composition and wherein *ep* = the total weight of the emulsion polymer, calculated on dry matter, comprised by the cheese coating composition is 0.

In one embodiment the cheese coating composition according to the invention comprises one or more film forming agents selected from an emulsion polymer and a biopolymer dispersion. In this embodiment the emulsion polymer is usually the main film forming agent and generally provides the most robust coating properties. In this embodiment the emulsion polymer preferably is a poly(vinyl ester) and/or a poly(meth)acrylate. In this embodiment the weight ratio *bp* / *(ep* + *bp*), wherein *bp* = the total weight of the biopolymer, calculated on dry matter, comprised by the cheese coating composition and wherein *ep* = the total weight of the emulsion polymer, calculated on dry matter, comprised by the cheese coating composition is preferably ≤ 0.4.

The water-borne cheese coating composition according to the invention preferably has a Brookfield viscosity of 1000-15000 mPa.s, wherein the Brookfield viscosity is determined according to a method based on ISO 2555. In this method, the viscosity of the coating composition is measured at 23 °C using a Brookfield viscometer type LVDV-E operated at speed 30 rpm using spindle number 4. The viscosity meter is levelled and the spindle is attached to the apparatus. The spindle is then immersed into the sample up to the mark on the spindle. The measurement is started and the result is taken at steady state or after one minute.

Most preferably, the Brookfield viscosity of the water-borne cheese coating composition thus determined is 2000 to 10000 mPa.s. Preferably, the coating composition has a Brookfield viscosity which is stable in time.

The water-borne cheese coating composition is preferably free of plasticizers, and more preferably is free of phthalates.

The water-borne cheese coating compositions defined herein are especially suitable to be used in the present method for coating a cheese. The coating composition according to the present invention can also be used to coat other food products, in particular sausages.

### Determination of the one or more film forming agents

The total amount of the one or more film forming agents is preferably determined as at least 80 wt.%, more preferably at least 90 wt.%, even more preferably at least 95 wt.%, most preferably at least 98 wt.%, of the combustible non-dissolved solid matter obtainable according to a method comprising centrifugation of the aqueous cheese coating composition to form a pellet and a transparent or translucent supernatant, isolating the pellet and drying it at ca. 105 °C for approx. 1 hour. Herein, "combustible solid matter" has its ordinary meaning and preferably relates to the weight fraction of the isolated pellet which, after drying at ca. 105 °C for approx. 1 hour, is not present as ashes. The relative amount, wt.% and/or identity of one or more individual film forming agents, such as specific emulsion polymers and/or biopolymer dispersions, can be suitably determined by applying conventional analytical techniques, such as NMR and/or mass spectrometry, to the pellet material which is preferably dried at ca. 105 °C for approx. 1 hour before analysis.

The wt.% of the total amount of the one or more film forming agents comprised by the water-borne cheese coating composition is preferably calculated as [*F*/*T*]*100%, wherein F equals the total weight of the one or more film forming agents comprised by the water-borne cheese coating composition, with F preferably being determined as the total weight of combustible solid matter; and T is the total weight of the water-borne cheese coating composition.

Preferably, the water-borne cheese coating composition comprises inorganic compounds at a total amount of 5 wt.% or less with respect to the total weight of the cheese coating composition.

### Embodiments of the emulsion polymer or of the biopolymer dispersion

The emulsion polymer preferably has a Tg of about 7-25 °C. Accordingly, good film forming properties can be obtained.

Preferably the biopolymer dispersion comprises or even consists of a biopolyester dispersion. In case the water-borne cheese coating composition comprises several emulsion polymers and/or biopolyester dispersions, the Tg is calculated as the weight average Tg of all emulsion polymers and/or biopolyesters present in the cheese coating composition.

### The biopolymer dispersion

A preferred biopolymer dispersion comprises one or more biopolyesters selected from the group consisting of a poly(lactic acid), a poly(lactide) and a poly(hydroxyalkanoate). The biopolymer dispersion may additionally or alternatively comprise a starch dispersion or a dispersion of a modified starch, or an aqueous composition comprising particles comprising at least partially denatured, preferably globular, proteins, or a mixture thereof. A preferred poly(hydroxyalkanoate) dispersion is defined in EP 0766719 which is hereby incorporated by reference. A preferred aqueous composition comprising at least partially denatured proteins is defined in WO 0180658, which is hereby incorporated by reference.

### The emulsion polymer

In one embodiment, the emulsion polymer is obtainable by emulsion polymerization of a monomer or a mixture of different monomers, wherein the monomer is selected from the group consisting of a vinylic ester of an aliphatic saturated monocarboxylic acid having a chain length of C₁-C₁₈, a diester of an alkanol having a chain length of C₁-C₁₈ and a monoethylenically unsaturated C₂-C₁₂ dicarboxylic acid, an acrylic ester of an alkanol having a chain length of C₁-C₁₈, a (meth)acrylic ester of an alkanol having a chain length of C₁-C₁₈, and an alpha-olefin having a chain length of C₂-C₁₈. Herein, a preferred alpha-olefin is ethylene. The vinylic ester of an aliphatic saturated monocarboxylic acid having a chain length of C₁-C₁₈ is preferably vinyl propionate or, most preferably, as vinyl acetate. The emulsion polymer is in a further embodiment obtainable by emulsion polymerization of a mixture of different monomers comprising (1) a vinylic ester of an aliphatic saturated monocarboxylic acid having a chain length of C₁-C₁₈ and a diester of an alkanol having a chain length of C₁-C₁₈ and a monoethylenically unsaturated C₂-C₁₂ dicarboxylic acid, (2) a vinylic ester of an aliphatic saturated monocarboxylic acid having a chain length of C₁-C₁₈ and an alpha-olefin having a chain length of C₂-C₁₈, or (3) a vinylic ester of an aliphatic saturated monocarboxylic acid having a chain length of C₁-C₁₈ and an acrylic ester of an alkanol having a chain length of C₁-C₁₈, wherein the mixture of different monomers comprises said monomers in a total amount of at least 80 wt.%, more preferably of at least 90 wt.% with respect to the weight of the mixture of different monomers.

The emulsion polymer is preferably a copolymer obtainable by emulsion polymerization of:
a. 40 to 97 parts by weight of a monomer selected from the group consisting of a vinylic ester of an aliphatic saturated monocarboxylic acid having a chain length of C₁-C₆, an acrylic ester of an alkanol having a chain length of C₁-C₆, and a methacrylic ester of an alkanol having a chain length of C₁-C₆; and
b. 3-60 parts by weight of a monoethylenically unsaturated monomer selected from the group consisting of a maleic mono- and/or diester of an alkanol having a chain length of C₁-C₁₈, a fumaric mono- and/or diester of an alkanol having a chain length of C₁-C₁₈, an acrylic ester of an alkanol having a chain length of C₁-C₁₈, a methacrylic ester of an alkanol having a chain length of C₁-C₁₈, an alpha-olefin having a chain length of C₂-C₁₈, acrylic acid, methacrylic acid, and itaconic acid.

Preferably, the monounsaturated C₂-C₁₂ dicarboxylic acid is maleic acid or fumaric acid, or a mixture thereof. The monomer mixture comprises or further comprises a monoethylenically unsaturated C₂-C₁₂ mono- or dicarboxylic acid or a salt thereof, or a mixture thereof. The mono-ethylenically unsaturated C₂-C₁₂ mono- or dicarboxylic acid is preferably selected from the group consisting of acrylic acid, methacrylic acid, itaconic acid, fumaric acid, maleic acid, a maleic mono-ester of an alkanol having a chain length of C₁-C₁₈, and a fumaric mono-ester of an alkanol having a chain length of C₁-C₁₈.

It is preferred that the vinylic ester of an aliphatic saturated monocarboxylic acid having a chain length of C₁-C₆ is vinyl acetate. Regarding the monomers under (a.), the (meth)acrylic ester of an alkanol having a chain length of C₁-C₁₈ is preferably methyl (meth)acrylate. Regarding the monomers under (b.), it is preferred that the alkanol having a chain length of C₁-C₁₈ is preferably propanol, butanol, pentanol, hexanol or octanol, or as a mixture thereof, and is most preferably (*n*-)butanol. The alpha-olefin is preferably ethylene or as octene or as a mixture thereof. The acrylic ester of an alkanol having a chain length of C₁-C₁₈ is preferably *(n-)*butyl acrylate. The diester of an alkanol having a chain length of C₁-C₁₈ and a monoethylenically unsaturated C₂-C₁₂ dicarboxylic acid is preferably dibutylmaleate or dibutylfumarate, or as a mixture thereof.

The emulsion polymer is most preferably obtainable by emulsion polymerization of a mixture of different monomers comprising (1) vinyl acetate and dibutylmaleate, (2) vinyl acetate and ethylene, or (3) vinyl acetate and n-butylacrylate, wherein the monomer mixture preferably comprises said two different monomers in a total amount of at least 80 wt.%, more preferably of at least 90 wt.% with respect to the weight of the mixture of different monomers.

In an especially preferred embodiment, the emulsion polymer is obtainable by emulsion polymerisation of a mixture of different monomers comprising vinyl acetate and dibutyl maleate. It is preferred that the monomer mixture comprises vinyl acetate and dibutyl maleate in a total amount of at least 80 wt.%, more preferably in an amount of at least 90 wt.%, most preferably in an amount of at least. 95% wt.% with respect to the weight of the mixture of different monomers. Preferably, the weight ratio of vinyl acetate to dibutyl maleate in the mixture of different monomers ranges between 80:20 and 40:60, even more preferably between 70:30 and 50:50.

In another preferred embodiment, the emulsion polymer is obtainable by emulsion polymerization of a mixture of different monomers comprising vinyl acetate and ethylene. It is preferred that the mixture of different monomers comprises vinyl acetate and ethylene in a total amount of at least 80 wt.%, more preferably in an amount of at least 90 wt.%, most preferably in an amount of at least 95 wt.% with respect to the weight of the mixture of different monomers. Most preferably, the mixture of different monomers consists of vinyl acetate and ethylene. Preferably, the weight ratio of vinyl acetate to ethylene in the mixture of different monomers ranges between 97:3 and 70:30, more preferably between 96:4 and 80:20, most preferably between 95:5 and 85:15.

In yet another preferred embodiment, the emulsion polymer is obtainable by emulsion polymerization of a mixture of different monomers comprising vinyl acetate and butylacrylate. It is preferred that the mixture of different monomers comprises vinyl acetate and butylacrylate in a total amount of at least 80 wt.%, more preferably in an amount of at least 90 wt.%, most preferably in an amount of at least. 95% wt.% with respect to the weight of the mixture of different monomers. Most preferably, the mixture of different monomers consists of vinyl acetate and butyl acrylate. Preferably, the weight ratio of vinyl acetate to n-butylacrylate in the mixture of different monomers ranges between 90:10 and 50:50.

In one embodiment the Tg of the emulsion polymer preferably ranges from 10 to 21 °C, or more preferably from 13 to 21 °C. Accordingly, good film properties can be obtained allowing for a proper balance between blocking (stickiness) and cutting properties of a cheese coated with the cheese coating composition.

By proper selection of (the relative amounts of) monomers, the Tg of the emulsion polymer can be varied. For example, the emulsion polymer may be selected as a homopolymer having a suitable Tg, for example as a homopolymer of vinyl propionate.

However, the emulsion polymer may also be selected as, for example, a copolymer comprising a "hard" monomer and a "soft" monomer. Herein, the "hard" monomer relates to a monomer which, when converted into a homopolymer, may have a Tg > 27 °C; the "soft" monomer relates to a monomer which, when converted into a homopolymer, may have a Tg < 27 °C. An especially preferred "hard" monomer is vinyl acetate. The Tg of poly(vinyl acetate) is approx. 38 °C. An especially preferred "soft" monomer may be selected from the group consisting of di(-n-)butylmaleate, di(-n-)butylfumarate, ethylene, (n-)butylacrylate and 2-ethylhexylacrylate. The higher the amount of the "soft" monomer relative to the "hard" monomer, the lower the Tg of the polymer. Small amounts of other monomers may be further polymerized with the monomer mixture. The glass transition temperature of many different polymers is suitably listed in handbooks and review articles.

Yet alternatively, the emulsion polymer may comprise a mixture of emulsion polymers, each having a different Tg. For example the emulsion polymer may comprise an emulsion of poly(vinyl acetate) homopolymer and/or an emulsion of poly(lactic acid) blended with an emulsion of another polymer having a lower Tg. In these mixtures it is preferred that at least one emulsion polymer has a Tg > 27 °C and at least one other emulsion polymer has a Tg < 27 °C.

Advantageously, the emulsion polymer is prepared in the presence of 0-3 parts by weight, preferably 0.1 to 1 parts by weight, based on the total weight of the monomer or monomer mixture, of an emulsifier, preferably a nonionic and/or an anionic emulsifier. Accordingly, cheese coating composition comprising said emulsion polymer may have a suitable stability and possess a favourable surface tension for coating cheese. Furthermore if too much emulsifier is present, the viability of the lactic acid bacteria can be compromised. Especially sodium dodecyl sulphate should not be present in the cheese coating composition in an amount which exceeds 3 parts by weight or more preferably sodium dodecyl sulphate does not exceed 1 part by weight, based on the total weight of the monomer or mixture of different monomers.

In an especially preferred embodiment the emulsion polymer comprises a polymer obtainable by emulsion polymerisation in the presence of a protective colloid. The protective colloid is preferably selected as one or more compounds selected from the group consisting of a poly(vinyl alcohol), a cellulose derivative, and a poly(vinyl pyrrolidone). The presence of the protective colloid may contribute to the survivability of the lactic acid bacteria in the cheese coating composition. Optimal effects on survivability of the lactic acid bacteria in the cheese coating composition can be obtained if the protective colloid comprises a poly(vinyl alcohol) or a cellulose derivative or a mixture thereof. The cellulose derivative is preferably a cellulose ether, such as hydroxyethylcellulose.

It is especially preferred that the emulsion polymer is prepared in the presence of 1-12 parts by weight, preferably 3 to 8 parts by weight, based on the total weight of the monomer or mixture of different monomers, of the protective colloid. Accordingly, a good stability and sufficient viscosity of the water-borne cheese coating composition can be obtained.

### The method for coating a cheese.

This method preferably further comprises drying the coated cheese thus obtained.

### The coated cheese.

The cheese is preferably a semi-hard or hard cheese which is preferably selected from the group consisting of Gouda, Edam, Maasdam, Leerdam, Emmental, Gruyère, and Parmesan.

### The deposited strain

The strain *Lactobacillus plantarum* LMG P-26358 has been isolated from the surface of a soft French artisanal cheese. Said strain is a lactic acid bacterium and was deposited under the terms of the Budapest treaty at Belgian Coordinated Collections of Micro-organisms (BCCM^{™}), Laboratorium voor Microbiologie - Bacteriënverzameling, Universiteit Gent, K.L. Ledeganckstraat 35, B-9000 Gent. It was assigned deposit number LMG P-26358. The bacteriocin produced by LMG P-26358 prevents outgrowth of *Enterococci* or *Listeria* as determined in an agar well diffusion assay using *Enterococcus faecalis* DPC 5055/LMG 7973 or *Listeria innocua* as the indicator organism. The scope of the present invention also encompasses a mutant of the deposited strain of *Lactobacillus plantarum* LMG P-26358 which mutant preferably has at least 95%, more preferably at least 97%, more preferably about 100% 16S rRNA similarity, preferably identity, with said deposited strain. Preferably said mutant also has the capability to produce the same Class IIa type bacteriocin as the deposited strain of *Lactobacillus plantarum* LMG P-26358. Herein the expression "mutant" is known to the skilled person and preferably relates to a strain of *Lactobacillus plantarum* obtained by mutation, variation or recombination of the deposited strain of *Lactobacillus plantarum* LMG P-26358.

Interestingly, also in the case of *Lactobacillus plantarum* LMG P-26358, viable bacteria of the strain are required to obtain a fungicidal effect. A cell-free extract of the strain did not have a fungicidal effect in a water-borne cheese coating composition. It was concluded that the bacteriocin produced by the deposited strain of *Lactobacillus plantarum* LMG P-26358 itself does not possess a significant fungicidal effect.

### Bacterial culture composition

The viable lactic acid bacteria to be included in the water-borne cheese coating composition according to the present invention are preferably in a bacterial culture composition that is preferably in frozen or freeze-dried form. A frozen or freeze-dried culture is easy to store until use. When in frozen form, the lactic acid bacteria culture composition is preferably in the form of frozen particles further preferably having a diameter from about 0.01 mm to about 50 mm, yet more preferably from about 0.1 mm to about 10 mm. Such particles are commonly known as pellets.

Alternatively, this bacterial culture composition may also be in liquid form. The liquid form is particularly advantageous in a method comprising applying the liquid bacterial culture composition to the surface of a cheese. The invention also discloses a cheese obtainable by this method.

The bacterial culture composition preferably comprises or most preferably consists of *(1) Lactobacillus plantarum* LMG P-26358; (2) water; (3) optionally non-lactic acid bacteria, preferably at a total colony forming unit density of less than 10⁴ cfu/g of the culture composition, and (4) optionally further additives in an amount of up to 20 wt.% relative to the weight of the culture composition. The lactic acid bacteria are preferably present at a colony forming unit density of at least 1.10⁹ cfu/g, more preferably of at least 1.10¹⁰ cfu/g of the culture composition. The optional further additives preferably comprise a cryoprotectant, such as a monosaccharide, and/or a disaccharide, and/or an oligosaccharide such as inulin and/or a polysaccharide such as gum arabic or xanthan gum, or a mixture thereof. The cryoprotectant is preferably present in an amount of 1-15 wt.% relative to the weight of the mixed lactic acid culture composition.

### EXAMPLES

### Materials

### Emulsion polymer

Mowilith SDM 4230 KL (Celanese, Frankfurt am Main) was employed as a source of the emulsion polymer. Mowilith SDM 4230 KL is a water-borne composition comprising about 45 wt.% of an emulsion copolymer of vinyl acetate and dibutyl maleate, which has been obtained by emulsion polymerisation in the presence of poly(vinyl alcohol) as protective colloid. The Tg of a film formed from Mowilith SDM 4230 KL was determined as 16 °C (DIN 53765-A-10: DSC, heating rate 10 K/min, film was dried at 100 °C during 1 hour).

### Isolation of Lactobacillus plantarum LMG P-26358

Approximately 1 g of a soft artisanal French cheese was homogenized in 9 ml of maximum recovery diluent (MRD), serially diluted and plated on MRS (de Man, Rogosa, Sharpe) agar (Difco Laboratories, Detroit, MI, USA) and grown at 30 °C for 2-3 days. Colonies that developed were overlaid with -10 ml of GM17 agar [M17 medium (Difco Laboratories) supplemented with 0.5% (w/v) glucose] inoculated at 0.25% with an overnight culture of *L. innocua.* The plates were incubated for another 18 h at 37 °C and inspected for zones of inhibition of the overlaid culture. Colonies showing a clear zone of inhibition were sub-cultured into fresh MRS broth having first been removed from the agar overlay using a sterile scalpel blade. Pure cultures were obtained by streaking onto MRS agar.

### Methods

### Fermentation and spray drying of Lactobacillus plantarum LMG P-26358

*Lb. plantarum* LMG P-26358 was grown to 8 1 in 20% RSM (reconstituted skim milk) with 0.5 % yeast extract and 0.2 g/l MnSO₄.4H₂O. The fermentate was concentrated to 40% total solids in a single-effect falling-film evaporator (Anhydro F1-Lab) before spray-drying. Concentrates were then dehydrated in a pilot-scale Anhydro spray drier (Model Lab 3) at an inlet temperature of 187 °C and an air outlet temperature of ∼ 85 °C. The powder was assayed for viable cells by plating on PCA and LBS, and counts were compared across both sets of plates to determine the cfu of *Lb. plantarum* LMG P-26358 per g of spray dried powder. Anti-listerial activity was assessed by adding the powder at 1% (w/v), 5% (w/v), 10% (w/v) and 15% (w/v) to 10⁴ cfu/ml of L. *innocua^{strep}* in GM17 broth (Difco Laboratories). The culture/powder mix was incubated for 6 hours at 37 °C and samples were removed every 2 hours to count *Listeria* by selecting on GM17 with streptomycin (500 µg/ml). Each experiment was performed in triplicate.

### Fermentation and concentration/pelletization of LMG P-26358

A concentrate of *Lactobacillus plantarum* LMG P-26358 in the form of frozen pellets was named ZC-LMG P-26358. This was otained by culturing LMG P-26358 under anaerobic conditions in a fermentor as follows: 20 ml of liquid medium of MRSB was inoculated with LMG P-26358 for 16 h at 37 °C. until pH 6.9. The culture was then centrifuged for 10-15 minutes at 4400 rpm (17 °C). To the obtained concentrate, lactose was added as a cryoprotector (8%). This concentrate was frozen in liquid nitrogen to obtain ZC-LMG P-26358 as pellets having a diameter of between 0.01 and 0.5 cm. The viable cell count of LMG P-26358 in these pellets was 2.10¹⁰ cfu/ml (counting on MRS agar comprising 0.2 g/l of MnSO₄.4H₂O).

### Preparation of water-borne cheese coating compositions

Water-borne cheese coating compositions were prepared by diluting Mowilith SDM 4230 KL with water to a solids content of 40 wt.% and setting the pH to 5.0. Natamycin (Delvocid®, DSM Food Specialties, The Netherlands) was added in amounts of 0, 50, 100 and 250 ppm, respectively, *Lactobacillus plantarum* LMG P-26358 was added as pellets in amounts of 0 g/l, 0.5 g/l and 5 g/l, respectively corresponding to an inoculation density with said strain of nil, 1.10⁷ cfu/ml and 1.10⁸ cfu/ml, respectively.

### Survivability assays in the water-borne coating composition

In the cheese coating compositions, viable cell counts of *Lactobacilli* were determined after 14 days of storage of the coating compositions, at room temperature, by plating on MRS agar.

### Antifungal assays on cheese

Three common spoilage fungi for semi-hard cheese were grown on malt extract agar (MEA). The fungi were selected as a strain of *Penicillium discolour,* a strain of *Aspergillus versicolor* and a strain of *Penicillium camembertii.* Each of the fungal flora covering the grown agar plates were harvested using a spatula and suspended into an aqueous solution. After dilution with water three fungal suspensions were obtained of each of the species each having a fungal concentration of approximately 10³ spores/ml. A part of each of these fungal suspensions was then taken apart, and these parts were mixed in equal amounts to provide a mixed fungal suspension comprising each of the three fungal strains indicated above.

Miniature Gouda-type cheese wheels having a weight of approx. 400g were inoculated with about 100 fungal spores by applying 0.1 ml of the mixed fungal suspension across the surface of the cheese. In the same manner, other miniature Gouda-type cheese wheels were treated with each of the fungal suspensions *Penicillium discolour, Aspergillus versicolor* and *Penicillium camembertii* separately.

Each cheese was covered with 5 grams of the coating composition (using a sponge).

The cheeses were then allowed to stand at room temperature over a saturated sodium sulphate solution to control the relative humidity, and fungal growth was visually assessed after 7 days.

### Results

### Survivability in cheese coating compositions

After 14 days, the average viable cell count of *Lactobacilli* in the cheese coating compositions exactly corresponded to the inoculation density at t=0. This result indicates 100% survivability of the strain of *Lactobacillus plantarum* LMG P-26358 in the cheese coating compositions.

### Cell counts of unwanted microorganisms in the cheese coatings

In a cheese coating composition not containing natamycin and *Lactobacillus plantarum* LMG P-26358, initial count of yeasts and fungi after preparation was about 1.10⁵ cfu/ml. Following incubation with the strains of *Lactobacillus plantarum* LMG P-26358, viable cell counts of yeasts and fungi dropped with at least 2 log units. It was established that this effect was achieved by viable bacteria of *Lactobacillus plantarum* LMG P-26358 only and not by a supernatant of a fermentate of *Lactobacillus plantarum* LMG P-26358, or by the spray dried fermentate of *Lactobacillus plantarum* LMG P-26358. Said supernatant or spray dried fermentate, containing a plantaricin produced by said bacterial strain, was found to be effective against outgrowth of *Listeria* but generally not against fungi.

Further addition of natamycin to the water-borne cheese coating composition at about 100 ppm would result in viable cell counts of yeasts and fungi to drop down to nil, whilst not affecting viable count of *Lactobacilli.*

### Fungicidal effects on cheese

In the absence of natamycin, cheeses treated with coating compositions comprising the strain of *Lactobacillus plantarum* LMG P-26358 showed less fungal contamination with especially *Aspergillus versicolor,* as compared with cheeses treated with the same coating compositions which did not comprise the strain of *Lactobacillus plantarum* LMG P-26358.

A cheese coating composition comprising 100 ppm natamycin and the strain of *Lactobacillus plantarum* LMG P-26358 at both dosages provided much enhanced growth-retarding effects against the fungal mix, as compared with the same cheese coating composition comprising 100 ppm natamycin only.

## Claims

1. A method for coating cheese comprising applying to the surface of the cheese a water-borne cheese coating composition comprising at least 20 wt.%, relative to the total weight of the composition, of one or more film forming agents selected from the group consisting of an emulsion polymer and a biopolymer dispersion, and wherein the cheese coating composition further comprises viable lactic acid bacteria at a total colony forming unit density of at least 1.10⁶ cfu/g of the water-borne cheese coating composition;
and wherein the viable lactic acid bacteria comprise a bacterial species selected from the group consisting of *Lactobacillus,*

2. The method according to claim 1, wherein the viable lactic acid bacteria are present in a total colony forming unit density of at least 1.10⁷ cfu/g, of the water-borne cheese coating composition.

3. The method according to any one of the preceding claims, wherein the viable lactic acid bacteria comprise a strain of *Lactobacillus plantarum,* and wherein preferably the total colony forming unit density of *Lactobacillus plantarum* is at least 1.10⁶ cfu/g, more preferably at least 1.10⁷ cfu/g, of the water-borne cheese coating composition.

4. The method according to any one of the preceding claims, wherein the viable lactic acid bacteria comprise *Lactobacillus plantarum* LMG P-26358, and wherein preferably the total colony forming unit density of *Lactobacillus plantarum* LMG P-26358 is at least 1.10⁶ cfu/g, more preferably at least 1.10⁷ cfu/g. of the water-borne cheese coating composition.

5. The method according to any one of the preceding claims, wherein the one or more film forming agents comprises one or more emulsion polymers selected from the group consisting of a polyvinyl ester and a poly(meth)acrylate.

6. The method according to any one of the preceding claims, wherein the biopolymer comprises a biopolyester.

7. The method according to any one of the preceding claims, wherein the emulsion polymer comprises a polymer obtainable by emulsion polymerisation in the presence of a protective colloid.

8. The method according to claim 7, wherein the protective colloid is one or more selected from the group consisting of a poly(vinyl alcohol), a cellulose derivative, and a poly(vinyl pyrrolidone).

9. The method according to any one of the preceding claims, wherein the water-borne cheese coating composition further comprises natamycin, preferably in an amount of 25-500 ppm relative to the weight of the water-borne cheese coating composition.

10. A water-borne cheese coating composition comprising at least 20 wt.%, relative to the total weight of the composition, of one or more film forming agents selected from the group consisting of an emulsion polymer and a biopolyester dispersion, wherein the cheese coating composition further comprises viable lactic acid bacteria at a total colony forming unit density of at least 1.10⁶ cfu/g of the water-borne cheese coating composition;
wherein the emulsion polymer comprises a polymer obtainable by emulsion polymerisation in the presence of a protective colloid; and
wherein the viable lactic acid bacteria comprise a bacterial species selected from the group consisting of *Lactobacillus.*

11. The water-borne cheese coating composition according to claim 10, wherein the viable lactic acid bacteria are present in a total colony forming unit density of at least 1.10⁷ cfu/g, of the water-borne cheese coating composition.

12. The water-borne cheese coating composition according to any one of claims 10-11, wherein the total colony forming unit density of *Lactobacilli* is at least 1.10⁷ cfu/g, of the water-borne cheese coating composition.

13. The water-borne cheese coating composition according to any one of claims 10-12, wherein the viable lactic acid bacteria comprise *Lactobacillus plantarum* LMG P-26358, and wherein preferably the total colony forming unit density of *Lactobacillus plantarum* LMG P-26358 is at least 1.10⁶ cfu/g, more preferably at least 1.10⁷ cfu/g. of the water-borne cheese coating composition.

14. The water-borne cheese coating composition according to any one of claims 10-13, wherein the protective colloid is one or more selected from the group consisting of a poly(vinyl alcohol), a cellulose derivative, and a poly(vinyl pyrrolidone).

15. The water-borne cheese coating composition according to any one of claims 10-14 further comprising natamycin, preferably in an amount of 25-500 ppm relative to the weight of the water-borne cheese coating composition.

16. A cheese coated with the cheese coating composition as defined in any one of claims 10-15.

17. An isolated strain of *Lactobacillus plantarum* LMG P-26358 or a mutant thereof preferably having at least 95% 16S rRNA similarity with LMG P-26358.

18. A bacterial culture composition comprising viable bacteria of *Lactobacillus plantarum* LMG P-26358 or a mutant thereof preferably having at least 95% 16S rRNA similarity with LMG P-26358.
